# EUROPÄISCHE PATENTANMELDUNG

(11) **EP 4 647 264 A1**
(43) Veröffentlichungstag der Anmeldung: **12.11.2025**
(21) Anmeldenummer: 25167454.5
(22) Anmeldetag: 31.03.2025
(51) Int. Cl.: B41M 5/24, B23K 26/352, B29C 59/16, B41M 5/26, B44C 1/22

(54) **FLASCHENKASTEN MIT ERKENNUNGSMARKE**

(30) Priorität: 03.05.2024 DE 102024112460
(71) Anmelder: Oberland M & V GmbH, 88410 Bad Wurzach (DE)
(72) Erfinder: GÖTZ, Lisa, 88410 Bad Wurzach (DE); GÖTZ, Kira, 88410 Bad Wurzach (DE)
(74) Vertreter: Simmons & Simmons LLP (Munich)

(57) **Zusammenfassung**

Die vorliegende Erfindung stellt ein Laser-basiertes Verfahren zum Verändern der Oberfläche eines Flaschenkastens bereit, wobei das Verfahren aufweist (i) Bereitstellen (S1) eines Flaschenkastens aus Kunststoff, und (ii) Behandeln (S2) zumindest eines Teils einer Oberfläche des Flaschenkastens mittels eines Lasers, sodass eine Materialstruktur der Oberfläche des Flaschenkastens verändert wird, sowie ferner einen Flaschenkasten aus Kunststoff, insbesondere behandelt mit dem Laser-basierten Verfahren, wobei der Flaschenkasten eine mittels Laserbehandlung zumindest teilweise veränderte Oberfläche aufweist, und weiter die Verwendung einer mittels des Laser-basierten Verfahrens auf der Oberfläche eines Flaschenkastens aus Kunststoff angebrachten Erkennungsmarke, insbesondere eines 2D-Matrix-Codes, weiter insbesondere eines Quick-Response-Codes, QR-Code, (10) zum exakten Identifizieren des Flaschenkastens.

## Beschreibung

### Technisches Gebiet

Die vorliegende Erfindung betrifft ein Laser-basiertes Verfahren zum Verändern der Oberfläche eines Flaschenkastens, einen Flaschenkasten mit mittels des Verfahrens veränderter Oberfläche, sowie die Verwendung einer mittels des Verfahrens aufgebrachten Erkennungsmarke zum exakten Identifizieren eines Flaschenkastens.

### Hintergrund

Im Getränkehandel ist es üblich, in Flaschen abgefüllte Getränke in Gebinden, so zum Beispiel in Getränkekästen (auch "Kasten" oder "Flaschenkasten") vorzuhalten und zu vertreiben. Die Flaschenkästen sind dabei üblicherweise aus einem Kunststoff hergestellt. Diese KunststoffFlaschenkästen sind herkömmlicherweise in einem Raster eingeteilt und in rechteckiger Form entsprechend dimensioniert, sodass sie zu logistischen Zwecken gut stapelbar und einem einheitlichen Rücklauf-Pfandsystem zuführbar sind. Derartige Rücklauf-Pfandsysteme sind bereits in vielen Ländern üblich, d. h. sobald ein Flaschenkasten mit leeren Flaschen wieder aufgefüllt ist, wird der Flaschenkasten mit den leeren Flaschen vom Kunden an den Verkäufer zurückgegeben und der Kunde erhält eine Rückerstattung in Höhe der vorausgezahlten Pfandsumme. Diese Art von Rücklauf-Pfandsystem gewährleistet eine nachhaltige Nutzung der Kästen und Flaschen, da diese entsprechend recycelt, d. h. gereinigt und wiederverwendet werden können. Die Kästen können auch leer zurückgegeben werden. Für den Getränkehersteller ist es wichtig, dass er seine Kästen zurückerhält, denn diese haben eine Lebensdauer von mehreren Jahren. Kästen unterschiedliche Getränkehersteller unterscheiden sich zumindest hinsichtlich ihres Designs, also zum Beispiel hinsichtlich ihrer Farbe, hinsichtlich der Gestaltung mit Markenzeichen, usw. Auch gibt es ungebrandete Flaschenkäste, also solche ohne konkrete Hinweise auf den Getränkehersteller. Es ist insbesondere auch wichtig für den Getränkehersteller, nicht nur einen Kasten passender Größe zurückzuerhalten, sondern tatsächlich den eigenen Kasten. Darüber hinaus gibt es im Handel auch rechtliche Anforderung. So kann es sein, dass beispielsweise nachgewiesen werden muss, ob, und welche Kästen fehlen, also nicht zum Getränkehersteller retourniert wurden.

Es ist bekannt, Flaschenkästen mit Radio-frequency identification (RFID)-Chips zu versehen, die elektronisch auslesbar sind und zur Identifizierung dieser Flaschenkästen dienen können. Dies ist jedoch aufwändig und sehr kostenintensiv. Die europäische Patentanmeldung EP 0601272 A1 offenbart ein Verfahren zur Herstellung eines Spritzgussteils sowie Vorrichtungen zur Durchführung des Verfahrens. Dabei wird eine beschriftete, gefärbte, bebilderte oder sonst markierte Folie in das Kunststoffmaterial des Spritzgussteils eingearbeitet und das Spritzgussteil, etwa ein Flaschenkasten, so markiert. Die europäische Patentanmeldung EP 1379452 A betrifft ein Verfahren zur Verfolgung von Behältern für gefährliche Abfälle und zur Verfolgung der in diesen Behältern gelagerten Abfälle. Dabei wird auf jedem Behälter mindestens ein Identifikationselement eingraviert oder aufgedruckt wird. Die Deutsche Patentanmeldung DE 102008028376 A1 betrifft eine Vorrichtung zum Kennzeichnen von PET-Flaschen mit einer Kennzeichnungseinrichtung, welche auf die PET-Flaschen eine Kennzeichnung anbringt und einer Prüfeinrichtung, welche das Vorhandensein der Kennzeichnung auf den PET-Flaschen überprüft, wobei die Prüfeinrichtung einen temperaturempfindlichen Sensor aufweist. All diese Vorschläge lösen jedoch nicht die Probleme im Zusammenhang mit der Rückführung der korrekten Flaschenkästen an den Getränkehersteller. Folien-basierte oder eingravierte Markierungen haben zum Beispiel eine deutlich kürzere Lebensdauer als ein konventioneller Flaschenkasten und sind daher ungeeignet. Das Kennzeichnen von PET-Flaschen löst ebenfalls nicht das Problem der korrekten Rückführung von Flaschenkästen.

Es besteht daher ein hoher Bedarf, die oben genannten Probleme im Zusammenhang mit der Rückführung der korrekten Flaschenkästen an den Getränkehersteller zu lösen.

### Zusammenfassung der Erfindung

Gelöst werden diese Probleme mit dem Gegenstand der angefügten Ansprüche.

Gemäß einem ersten Aspekt der vorliegenden Erfindung wird ein Laser-basiertes Verfahren zum Verändern der Oberfläche eines Flaschenkastens bereitgestellt, wobei das Verfahren die folgenden Schritte aufweist:
(i) Bereitstellen eines Flaschenkastens aus Kunststoff, und
(ii) Behandeln zumindest eines Teils einer Oberfläche des Flaschenkastens mittels eines Lasers, sodass eine Materialstruktur der Oberfläche des Flaschenkastens verändert wird.

Gemäß einer Ausführungsform kann der Flaschenkasten noch zusätzlich mindestens einen der folgenden Schritte in beliebiger Reihenfolge aufweisen:
(iii) Bedrucken des Flaschenkastens, und/oder
(iv) Auftragen einer Schutzschicht, insbesondere eines Schutzlacks, auf zumindest einen Teil des Flaschenkastens, insbesondere auf den in Schritt (ii) behandelten Bereich.

Alternativ oder ergänzend kann Schritt (iii) auch umfassen, den Flaschenkasten mit einem Inmould-Label und/oder mit einem Haft-Etikett zu versehen. Ferner ist es in einer Ausführungsform auch möglich, zusätzlich oder alternative, einen zweiten Spritzprozess durchzuführen, um eine weitere Oberflächenveränderung hinzuzufügen, insbesondere im sog. 2Komponenten-(2K)-Verfahren.

Gemäß einem zweiten Aspekt der Erfindung wird ein Flaschenkasten aus Kunststoff bereitgestellt, insbesondere behandelt mit einem Laser-basierten Verfahren gemäß dem ersten Aspekt, wobei der Flaschenkasten eine mittels Laserbehandlung zumindest teilweise veränderte Oberfläche aufweist.

Gemäß einem weiteren Aspekt stellt die Erfindung eine Verwendung einer mittels Laser-basierten Verfahrens auf der Oberfläche eines Flaschenkastens aus Kunststoff angebrachten Erkennungsmarke, insbesondere eines 2D-Matrix-Codes, weiter insbesondere eines Quick-Response-Codes, QR-Code, zum exakten Identifizieren des Flaschenkastens bereit.

Im Kontext dieser Erfindung ist unter "Verändern" insbesondere das Verändern der Materialstruktur der Kunststoffoberfläche zu verstehen, sodass die Veränderung für den Benutzer und/oder für eine Maschine insbesondere optisch und/oder haptisch wahrnehmbar ist.

Als "Oberfläche" wird im Rahmen dieser Erfindung grundsätzlich die äußerste Fläche des Flaschenkastens, also die Schnittfläche zwischen dem Flaschenkasten und der Umgebung verstanden. Im Rahmen dieser Erfindung schließt "Oberfläche" jedoch auch die unter dieser Schnittstelle liegenden Schichten mit ein. In anderen Worten kann sich die Behandlung bzw. Veränderung der Oberfläche auch auf das Innere des Kunststoffmaterials des Flaschenkastens beziehen. Es kann also ebenfalls ein Innenbereich eines Flaschenkastens, z. B. an der Innenseite von Griffen bearbeitet, also z. B. dekoriert werden. Ebenso können Rundungen und Erhebungen und Vertiefungen bearbeitet werden, wie z. B. die Außeneckrundungen eines Flaschenkastens, oder sogar Riffelungen. Mit herkömmlichen Verfahren, z. B. Bedrucken, ist dies nicht möglich.

Im Kontext dieser Erfindung ist unter "Kunststoff" ein formbares, synthetisches oder halbsynthetisches Material zu verstehen, das aus organischen Polymeren mit hohem Molekulargewicht besteht. In diesem speziellen Fall bezieht sich Kunststoff auf das Material, aus dem Flaschenkästen hergestellt sind. Diese Flaschenkästen sind robust und langlebig, um den Transport und die Lagerung von Flaschen zu erleichtern. Ein weiterer Vorteil in der Verwendung von Kunststoff als Material für die Herstellung von Flaschenkästen liegt in dem verhältnismäßig geringem Gewicht, was insbesondere für den Transport eine Rolle spielt. Ein geringeres Gewicht trägt zu geringeren Transportkosten bei und ist auch aus diesem Grunde nachhaltiger. Vorzugweise ist der Kunststoff ausgewählt aus Polyethylen hoher Dichte (HDPE) und/oder Polypropylen (PP). Die Verwendung anderer Kunststoffe ist möglich.

Im Rahmen der vorliegenden Erfindung ist unter "Laser" (die dem Fachmann bekannte Abkürzung für "light amplification by stimulated emission of radiation") eine Vorrichtung zu verstehen, welche Licht durch einen Prozess der optischen Verstärkung auf der Grundlage der stimulierte Emission von elektromagnetischer Strahlung erzeugt. Das dabei entstehende, hochenergetische, hochfokussierte und kohärente Licht wird verwendet, um spezifische Bereiche auf der Oberfläche von Kunststoffflaschenkästen zu behandeln. Der Begriff "Laser" wird hierin gleichermaßen für das Licht selbst verwendet. In einer Ausführungsform ist ein Laser ein Faserlaser, also eine spezielle Form des Festkörperlasers. In einer Ausführungsform hat ein Laser eine Wellenlänge im Infrarot (IR)-Bereich, insbesondere im Bereich von 780 nm bis 1400 nm, zum Beispiel 1064 nm.

Die Kunststoffoberfläche absorbiert den Laserstrahl in das Material. Die geringe Wärmeleitfähigkeit von Kunststoff führt zu geringem Energieverlust. Daher kann die Kunststoffoberfläche schnell behandelt, d. h. gelasert werden. Das makromolekulare Grundgerüst der Kunststoffe absorbiert in der Regel im ultravioletten und im fernen Infrarotbereich, die unterschiedlichen Zusatzstoffe wie Ruß oder Farbstoffe hingegen in unterschiedlichen Wellenlängenbereichen. Bei der Behandlung von Kunststoffmaterialien mittels Lasers wird die Oberfläche des Materials durch die Energie des Laserstrahls erhitzt. Die Laserwellenlänge spielt je nach Anwendung eine wichtige Rolle bei der Beschriftung von Werkstoffen. Im Rahmen dieser Erfindung können verschiedene Lasersysteme zur Anwendung kommen. Gemäß einer Ausführungsformen der Erfindung ist der Laser ausgewählt aus Faserlaser, Neodym-dotierter Yttrium Aluminium-Granat-Laser ("Neodym-YAG-Laser"), und Nanosekundenlaser.

Je nach Frequenz lassen sich unterschiedliche Ergebnisse erzielen, was auch vom Kunststoffmaterial ab-hängig ist. Bevorzugt liegt die Frequenz zwischen 1.064 und 355 nm.

Ein Vorteil der Verwendung eines Lasers ist, dass auch leichte Verschmutzungen keinen Einfluss auf die langfristige Lesbarkeit von Markierungen nehmen können.

Im Detail betrachtet liegen dem Schritt (ii) des Behandelns der Oberfläche des Flaschenkastens mittels des Lasers die folgenden Prinzipien zugrunde:
(1) Verdampfung: Bei hohen Temperaturen, wie sie durch die Einwirkung des Lasers auf die Kunststoffoberfläche entstehen können, kann der Kunststoff direkt verdampfen, wodurch Material entfernt wird und präzise Konturen oder Gravuren entstehen.
(2) Schmelzen: Der Kunststoff kann auch schmelzen, insbesondere bei niedriger Laserenergie. Dies kann dazu führen, dass sich die Oberfläche des Materials verfestigt und eine glatte Oberfläche bildet. Diese glatte Oberfläche hebt sich dann zum Beispiel von der übrigen, eher rauen Oberfläche, ab und zusammen bilden die Abschnitte aus glatter und rauer Oberfläche ein Muster.
(3) Abtrag: In einigen Fällen kann der Laserstrahl auch dazu verwendet werden, dünnere Schichten des Kunststoffs abzutragen, um eine bestimmte Form oder Struktur zu erzeugen.
(4) Aufschäumung: Der Laser kann auch die Materialstruktur verändern, um dadurch etwa Farbunterschiede zu erzeugen. So können verschiedene Farbnuancen einer gleichen Grundfarbe erzeugt werden. Wenn ein Getränkekasten beispielsweise die Grundfarbe "Grün" aufweist, kann mittels Laserbehandlung an einer Stelle ein dunklerer oder hellerer Grünton erzeugt werden. Dadurch können Muster erzeugt werden.

Gemäß einer Ausführungsform ist der Laser so konfiguriert, dass das zumindest teilweise Behandeln der Oberfläche des Flaschenkastens mindestens eines von Verdampfung, Schmelzen, Abtrag und Aufschäumung des Materials aufweist, insbesondere wobei durch das Verändern der Materialstruktur des Kunststoffs ein Farbunterschied zwischen einem behandelten Abschnitt und einem nicht behandeltem Abschnitt der Oberfläche erzeugt wird. Das Erzeugen eines Farbunterschieds wird vorzugsweise mittels des "Aufschäumen" der Oberfläche erzielt. Ein so behandelter Flaschenkasten weist in einer Ausführungsform daher mindestens einen nicht veränderten Abschnitt und mindestens einen mittels Laserbehandlung veränderten Abschnitt der Oberfläche, wobei der mittels Laserbehandlung veränderte Abschnitt der Oberfläche eine veränderte Materialstruktur im Vergleich zu dem nicht veränderten Abschnitt aufweist, insbesondere wobei beide Abschnitte einen Farbunterschied zueinander aufweisen.

Durch das Verändern der Materialstruktur in verschiedenen Abschnitten der Oberfläche des Flaschenkastens durch eines der oben genannten Prinzipien (1)-(4) können in einer weiteren Ausführungsform auch dekorative Elemente auf die Oberfläche des Flaschenkastens aufgebracht werden, zum Beispiel eine "Holz-Optik" oder ähnliches.

In einer Ausführungsform wird der Flaschenkasten durch das zumindest teilweise Behandeln der Oberfläche des Flaschenkastens mittels des Lasers mit einer Erkennungsmarke oder einem dekorativem Element versehen. Unter "Erkennungsmarke" ist im Rahmen dieser Erfindung insbesondere eine grafische Darstellung von Informationen, die eine vorzugsweise exakte und eindeutige Identifizierung und Zuordnung eines Objekts wie eines Flaschenkastens erlaubt. In einem Ausführungsbeispiel kann die Erkennungsmarke ein numerischer oder alphanumerischer Code sein.

Ein Vorteil der Erfindung, insbesondere des erfindungsgemäßen Verfahrens und der erfindungsgemäßen Verwendung, ist es, dass in einer Serienfertigung jedes einzelne Produkt, also etwa jeder einzelne Flaschenkasten, individualisiert werden kann, z. B. durch eine fortlaufende Nummer oder durch Veränderungen von Bilddarstellungen auf jedem Produkt. Dies ist bei anderen Dekorvarianten wie Siebdruck oder In-Mold-Labeling (IML) in der Serienfertigung nicht oder zumindest nur durch immensen Kostenaufwand möglich, da beispielswiese für jedes individuelle Motiv eine individuelle Matrize benötigt würde.

Entsprechend wird in einer Ausführungsform mittels des erfindungsgemäßen Verfahrens die Oberfläche von mindestens zwei Flaschenkästen behandelt, insbesondere in einer Serienfertigung, sodass die Oberflächen der Flaschenkästen mittels des Lasers mit einer jeweiligen Erkennungsmarke oder einem jeweiligen dekorativem Element versehen werden, und wobei sich die Erkennungsmarken oder die dekorativen Elemente der mindestens zwei Flaschenkästen voneinander unterscheiden.

Gemäß einer Ausführungsform dieser Erfindung ist die Erkennungsmarke ein 2D-Matrix-Code. Ein 2D (zweidimensionaler)-Matrixcode, auch bekannt als zweidimensionaler Barcode, ist eine grafische Darstellung von Informationen, die sowohl horizontal als auch vertikal in einem quadratischen oder rechteckigen Muster gespeichert werden. Im Gegensatz zu herkömmlichen eindimensionalen Barcodes, die nur in einer Richtung (horizontal) gelesen werden können, können 2D-Matrixcodes in beide Richtungen gelesen werden. Diese Codes können eine Vielzahl von Informationen speichern, einschließlich Text, URLs, und andere Daten. Vorteilhaft sind sie in der Lage, eine größere Menge an Informationen auf einer kleineren Fläche zu speichern als herkömmliche Barcodes. Es gibt verschiedene Arten von 2D-Matrixcodes, etwa Data Matrix Codes, Aztec Codes und viele andere. Jeder dieser Codes hat spezifische Eigenschaften und Anwendungen, aber alle teilen die grundlegende Fähigkeit, Informationen in einem zweidimensionalen Muster zu speichern und zu codieren.

Gemäß einer Ausführungsform ist der 2D-Matrix-Code ein Quick-Response-Code (QR-Code). Ein QR-Code ist wie oben beschrieben eine Art zweidimensionaler Barcode, der Informationen speichern kann, die digital ausgelesen werden können. Ein QR-Code besteht aus Quadraten, die auf einem Hintergrund angeordnet sind, und kann beispielsweise mit einem Smartphone oder einem speziellen QR-Code-Lesegerät gescannt werden. Die Informationen im Code können dann sofort angezeigt oder ausgeführt werden. QR-Codes können verschiedene Arten von Informationen speichern, wie z.B. Text, URLs zu Websites, Kontaktdaten, Standortkoordinaten, E-Mail-Adressen, Telefonnummern und vieles mehr. Der Inhalt, den ein QR-Code darstellt, kann einzigartig gemacht werden, beispielsweise mittels einer eindeutigen Identifikationsnummer. So lässt sich mittels eines QR-Codes ein Flaschenkasten exakt identifizieren. Oft besteht ein QR-Code aus schwarzen Quadraten auf weißem Hintergrund. Der Kontrast zwischen den Quadraten und dem Hintergrund kann jedoch auch durch Oberflächen-Strukturunterschiede zwischen den Flächen bzw. Abschnitten, die die Quadrate aufweisen, und dem Hintergrund entstehen. Wird zum Beispiel die Kunststoffoberfläche eines einfarbigen (zum Beispiel grünen) Flaschenkastens mittels des erfindungsgemäßen Verfahrens behandelt, so können die Quadrate dadurch entstehen, dass die Abschnitte der Oberfläche, welche die Quadrate aufweisen sollen, mittels des Lasers behandelt werden, und die Abschnitte, welche den Hintergrund darstellen sollen, nicht behandelt werden. Umgekehrt ist es ebenfalls möglich. Die Quadrate können dann zum Beispiel durch Glätten der Oberfläche (siehe Prinzip (2) oben) entstehen, oder durch Aufschäumen (Prinzip (4)), wodurch ein Farbunterschied entsteht, oder auf eine andere Art. Andere Muster und Erkennungsmarken können auf die gleiche Art und Weise auf die Oberfläche aufgebracht werden. Überraschend wurde festgestellt, dass insbesondere beim Aufbringen eine 2D-Matrix-Codes gemäß der vorliegenden Erfindung dieser 2D-Matrix-Code selbst nach bis zu 30 % Beschädigung der Fläche (wie Kratzer und Abrieb) immer noch lesbar bzw. erfassbar ist.

Zum exakten Identifizieren des Flaschenkastens bzw. mehrere Flaschenkästen hat in einer Ausführungsform jeder Flaschenkasten eine eindeutige Erkennungsmarke, die sich nicht wiederholt, d. h. kein zweiter Flaschenkasten hat dieselbe Erkennungsmarke. Dies ist vergleichbar mit einer Seriennummer.

In einer weiteren Ausführungsform enthält der 2D-Matrix-Code, insbesondere der QR-Code, eine Werbebotschaft. So kann der 2D-Matrix-Code auch zu Werbezwecken genutzt werden. Dazu kann der 2D-Matrix-Code insbesondere elektronisch auslesbar sein und beispielsweise zu einer webbasierten Landing-Page führen, z. B. für ein Gewinnspiel oder für Informationen zur Nachhaltigkeit des Produkts in dem Flaschenkasten.

Gemäß einer Ausführungsform ist der Flaschenkasten einstückig als Spritzgussteil ausgestaltet oder der Flaschenkasten ist mittels eines Mehrkomponenten-Spritzgieß-Verfahrens hergestellt. Eine einstückige Herstellung hat zahlreiche Vorteile wie etwa strukturelle Integrität, Recyclingfähigkeit, Qualität, und Flexibilität im Design. Das Mehrkomponenten-Spritzgießen macht darüber hinaus möglich, Flaschenkästen bzw. Komponenten davon aus mehreren verschiedenen Kunststoffen herzustellen. So hergestellte Komponenten von Flaschenkästen haben unterschiedliche oder sogar gegensätzliche Eigenschaften. Werden genau zwei Materialien miteinander kombiniert, so spricht man von "2K Anwendungen". 2K steht dabei für "zwei Komponenten" (z. Bsp.: Hart- / Weich), die im Spritzgusswerkezug miteinander verbunden werden.

In einer Ausführungsform weist der Kunststoff lasersensitive Additive auf. Dadurch kann das Ergebnis der Laserbehandlung verbessert werden. Somit ist eine hohe Lesbarkeit und Beschriftungsqualität zu erzielen. Die Eigenschaften der Kunststoffe bleiben dabei im Wesentlichen erhalten.

Durch Zugabe eines lasersensitiven Additivs zum Kunststoff können kontrastreiche Markierungen erzeugt werden, die sowohl für einen Nutzer als auch für eine Maschine gut lesbar sind. Durch die Auswahl des richtigen Lasermarkierungsadditivs können außerdem Markierungen erstellt werden, die gegen Verblassen, Beschädigung durch Sonnenlicht oder andere Umwelteinflüsse beständig sind. Langfristige Lesbarkeit gewährleistet die Rückverfolgbarkeit der Flaschenkästen. Darüber hinaus können mit Lasermarkierungszusätzen Markierungen erzeugt werden, die nur unter bestimmten Bedingungen sichtbar sind, z. B. unter ultraviolettem Licht.

Lasersensitive Additive (auch "Lasermarkierungsadditive") sind spezielle Chemikalien, die dem Kunststoff zugesetzt werden können, um ihn für Laserstrahlen empfindlicher zu machen. Wenn sie einem Laserstrahl ausgesetzt werden, absorbieren die Moleküle des Additivs Energie und erhitzen sich, wodurch sie auseinanderbrechen und verdampfen. Dadurch lassen sich sehr präzise Markierungen auf Kunststoffen anbringen.

Einige Beispiele für lasersensitive Additive sind etwa thermochrome Materialien, welche ihre Farbe in Abhängigkeit von der Temperatur, die durch die Laserbestrahlung erhöht werden kann, ändern, und photochrome Materialien, welche ihre Farbe in Reaktion auf spezifische Wellenlängen des Lichts, wie sie von einem Laser erzeugt werden können, ändern. Der Fachmann weiß, dass die Auswahl des geeigneten Additivs von der spezifischen Anwendung und den Eigenschaften des verwendeten Kunststoffs abhängt.

In einer Ausführungsform können besondere Additive hinzugegeben werden, um den Kontrast des Kunststoffmaterials zu einem 2D-Matrix-Code zu erhöhen, damit dieser noch besser lesbar wird. Dadurch kann der Code beispielsweise noch besser mittels eines Lesegeräts ausgelesen werden. In noch einer Ausführungsform können Additive auch weitere Farben als die des Kunststoffmaterials bereitstellen.

Wie oben bereits beschrieben kann mittels der Additive ein Flaschenkasten mit Dekorationen versehen werden. Die folgenden Ausführungsformen werden ferner im Rahmen dieser Erfindung bereitgestellt:
Bei einer sogenannten Carbonisierung (Schwärzung) entstehend durch lokale Hitzeeinwirkung dunkle Bereiche durch Verkohlung von Additiven im Kunststoff. In einer Ausführungsform weist das Material eine oberste, im Wesentlichen transparente Deckschicht auf und die Additive werden in einer unterhalb der Deckschicht liegenden Schicht verkohlt (zumindest teilweise verbrannt). Somit ergibt sich ein Farbumschlag unter der Oberfläche und nicht, wie etwa bei der Aufschäumung, oberhalb bzw. auf der Oberfläche. Dies kann als "Tiefenwirkung" bezeichnet werden. Mit anderen Worten erfolgt das Behandeln zumindest eines Teils einer Oberfläche des Flaschenkastens mittels eines Lasers in einer Ausführungsform so, dass Additive im Kunststoff zumindest teilweise verkohlen. Dabei kann die Leistung des Lasers und/oder die Länge des Behandelns entsprechend angepasst sein. Ebenfalls ist das Additiv oder sind die Additive so angepasst, dass sie verkohlen können.

Bei einem Aufschäumen erhitzt der Laser das Material, sodass kleine Gasbläschen entstehen, die eine im Vergleich zu dem Material andersfarbige, in der Regel hellere Materialstruktur der Oberfläche entsteht. Die so veränderte Materialstruktur kann insbesondere von dem Material hervorstehen, sodass sich ein optisch-haptischer Effekt ergibt.

Bei einer Gravur wird Material mittels des Lasers direkt abgetragen, um eine, insbesondere fühlbare, Struktur zu schaffen. Entsprechend umfasst das Behandeln zumindest eines Teils einer Oberfläche des Flaschenkastens mittels eines Lasers in einer Ausführungsform das Einstellen des Lasers, sodass Material abgetragen wird.

Bei dem Behandeln zumindest eines Teils einer Oberfläche des Flaschenkastens mittels eines Lasers können folgende Mechanismen des Farbumschlags ablaufen:
Die Laserenergie kann chemische Bindungen brechen oder die molekulare Struktur des Kunststoffs verändern. Diese Molekülstrukturänderung kann zu einer neuen Lichtreflexion führen, wodurch der Farbton anders wahrgenommen wird.

Durch lokale Erwärmung aufgrund des Energieeintrags durch den Laser kann es zu einer oxidativen Reaktion mit Sauerstoff aus der Umgebungsluft kommen. Diese Oxidations-Reaktion führt zu einer Farbveränderung, meist hin zu einem dunkleren Farbton.

Gemäß weiterer Ausführungsformen können die folgenden Faktoren wichtig für einen Farbumschlag des Materials sein:
a. Laserwellenlänge: In manchen Ausführungsformen kann zum Beispiel ein UV-Laser (z. B. 355 nm) oder ein Faserlaser (z. B. 1064 nm) sehr effizient sein.
b. Pulslänge und Intensität: Gemäß einer Ausführungsform, in der ein Farbumschlag erwünscht ist, müssen Pulslänge und/oder Intensität des Lasers so eingestellt sein, dass es nicht zu einer Gravur oder einem Materialabtrag, wie oben beschrieben, kommt.
c. Materialzusammensetzung: In einer bevorzugten Ausführungsform ist das Material PE (Polyethylene), insbesondere HDPE (Polyethylen hoher Dichte), mit Additiven versetzt. Das ermöglicht stärkere Farbkontraste. Der Einsatz anderer geeigneter Kunststoffe ist ebenso möglich.

Wie hierin bereits beschrieben kann durch Zugabe spezieller Additive (z. B. Metalloxide, Pigmente) die Absorption des Laserlichts verbessert werden und Farbeffekte können erzielt werden. Je nach Additiv kann ein Farbumschlag von hell nach dunkel oder von dunkel nach hell erfolgen.

Gemäß einer Ausführungsform können die folgenden Metalloxide als Additive verwendet werden:
Titandioxid (TiO₂) fördert einen weißen oder hellen Farbumschlag, besonders bei dunklen HDPE-Grundfarben. Eisenoxid (Fe₂O₃, Fe₃O₄) erzeugt einen rötlichen bis braunen Farbumschlag. Zinkoxid (ZnO) unterstützt eine Aufhellung des Materials durch Reflexionseffekte. Kupferoxid (CuO) kann dunklere oder grünliche Markierungen erzeugen. Eine Kombination verschiedener hier beschriebene oder weiterer Metalloxide ist ebenso möglich.

Gemäß einer Ausführungsform können die folgenden Pigmente als Additive verwendet werden: Ruß (Carbon Black) ist ein sehr effektiver Absorber für Laserenergie und fördert insbesondere eine schwarze Beschriftung auf hellem Material. Organische Farbpigmente (z. B. Phthalocyaninblau, Chinacridonrot) können durch gezielte Laserbehandlung in eine andere Farbvariante umgewandelt werden. Sogenannte "Laseraktive Pigmente" sind spezielle Pigmentmischungen, die durch thermochemische Reaktion eine gut sichtbare Farbänderung ermöglichen. Eine Kombination verschiedener hier beschriebene oder weiterer Pigmente ist ebenso möglich.

Insbesondere ist es in einer Ausführungsform möglich eines oder mehrere Metalloxide und eines oder mehrere Pigmente zu kombinieren, um einen gewünschten Effekt zu erhalten.

In einer Ausführungsform entstehen sogenannte thermochromatische Effekte. Hohe Temperaturen (zum Beispiel über 300 °C) durch Energieeintrag mittels des Lasers führen dabei zu einer Umwandlung von Farbpigmenten im Kunststoff, was eine sichtbare Farbänderung erzeugt. Dieser Effekt ist besonders nützlich für Kontrastmarkierungen.

Die oben beschriebenen Verfahren sind nicht nur anzuwenden auf Flaschenkästen, sondern können auch genutzt werden, um etwa Seriennummern, Barcodes und Logos auf Verpackungen oder technischen Bauteilen anzubringen. Insbesondere sind die Verpackungen Medizin- und Lebensmittelverpackungen. Die Verwendung des erfindungsgemäßen Verfahrens in Verbindung mit solchen Verpackungen ist vorteilhaft, da keine chemischen Zusatzstoffe nachträglich nötig sind, was die Echtheit des Inhalts gewährleistet. Generell besteht ein Vorteil der Erfindung darin, dass keine (chemische) Nachbehandlung der gemäß des erfindungsgemäßen Verfahrens veränderten Oberfläche notwendig ist, d. h. kein Auftragen einer Farbe, ein Bekleben, kein Ätzen, etc.

Wie hier und auch in den beigefügten Ansprüchen eventuell verwendet, können die Singularformen "ein"/"eine"/"einer" und "der"/"die"/"das" auch deren Plural umfassen, sofern der Kontext nicht eindeutig etwas anderes vorgibt. In ähnlicher Weise sind die Wörter "umfassen", "enthalten" und "aufweisen" sowohl als "ausschließlich" als auch "nicht ausschließlich" zu verstehen, also im Sinne von "einschließlich, aber nicht beschränkt auf...". Die Begriffe "mehrere", "Vielfaches" oder "Vielzahl" beziehen sich üblicherweise auf zwei oder mehr, d.h. 2 oder >2, einschließlich weiterer ganzzahliger Vielfacher von 1, wobei sich die Begriffe "einzeln" oder "allein" auf Eins beziehen, also "=1". Ferner ist der Ausdruck "mindestens eins" oder "wenigstens eins" als eins oder mehrere, d.h. 1 oder >1, ebenfalls mit ganzzahligen Vielfachen, zu verstehen. Außerdem sollen sich die Wörter "hierin", "oben", "vorher" und "unten" oder "nachfolgend" und Wörter mit ähnlicher Bedeutung, wenn sie in dieser Beschreibung verwendet werden, auf diese Beschreibung insgesamt und nicht auf bestimmte Teile der Beschreibung beziehen.

Merkmale, die zuvor zu einer Ausführungsform des erfindungsgemäßen Kastens beschrieben wurden können sinngemäß auch zur Definition der erfindungsgemäßen Verwendung und zur Definition des erfindungsgemäßen Verfahrens verwendet werden und sind hiermit ausdrücklich auch als Verwendungs- und/oder Verfahrensmerkmale offenbart. Gleiches gilt in die andere Richtung, Merkmale die nur zur Verwendung oder zum Verfahren offenbart sind können auch zur Definition des erfindungsgemäßen Kastens verwendet werden.

Die Beschreibung spezifischer Ausführungsbeispiele in dieser Schrift soll nicht als erschöpfend angesehen werden, oder die hierin gegebene Offenbarung soll nicht auf die genaue offenbarte Form beschränkt werden. Während hierin beschriebene spezifische Ausführungsbeispiele und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente von beschriebenen Ausführungsbeispielen können für technische Elemente in anderen Ausführungsbeispielen kombiniert oder durch diese ersetzt werden. In den Zeichnungen bezeichnen gleiche Bezugszeichen gleiche Elemente, um Wiederholungen zu vermeiden, und Teile, die der Fachmann ohne spezielles Wissen umsetzen kann, können aus Gründen der Übersichtlichkeit weggelassen werden. Während Vorteile, die bestimmten Ausführungsbeispielen der Offenbarung zugeordnet sind, im Zusammenhang mit diesen Ausführungsbeispielen beschrieben werden, können andere Ausführungsbeispiele ebenfalls diese Vorteile aufweisen.

Das nachfolgend beschriebene Ausführungsbeispiel soll eine mögliche Ausgestaltung der vorliegenden Erfindung veranschaulichen. Als solche sind alle spezifischen technischen Details, wie sie nachfolgend ebenfalls diskutiert werden, nicht als Beschränkungen des Umfangs der vorliegenden Erfindung auszulegen. Für den Fachmann ist es offensichtlich, dass verschiedene Abwandlungen und Änderungen vorgenommen werden können, ohne von dem Schutzbereich der vorliegenden Schrift abzuweichen, wie er durch die angehängten Ansprüche festgelegt ist. Weitere Aspekte und Vorteile der vorliegenden Erfindung ergeben sich aus der folgenden Beschreibung der bevorzugten, in den Figuren dargestellten Ausführungsbeispielen.

### Kurze Beschreibung der Figuren

Ausführungsformen der Erfindung sind in den Zeichnungen dargestellt und in der nachfolgenden Beschreibung näher erläutert. Es zeigen:
- Figur 1: einen Quick-Response (QR)-Code,
- Figur 2: mehrere Ausführungsformen eines QR-Codes auf einem Stück Kunststoff aufgebracht mittels des erfindungsgemäßen Verfahrens,
- Figur 3: ein Blockdiagramm eines erfindungsgemäßen Verfahrens gemäß einer Ausführungsform,
- Figur 4: eine Ansicht eines beispielhaften Flaschenkastens, aufweisend einen mittels des erfindungsgemäßen Verfahrens aufgebrachten QR-Codes, und
- Figur 5: einen Ausschnitt eines Flaschenkastens aus einem Kunststoff 20, aufweisend mittels des erfindungsgemäßen Verfahrens erzeugte dekorative Elemente 13.

### Ausführungsformen der Erfindung

In der nachfolgenden Beschreibung der Ausführungsformen der Erfindung werden gleiche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

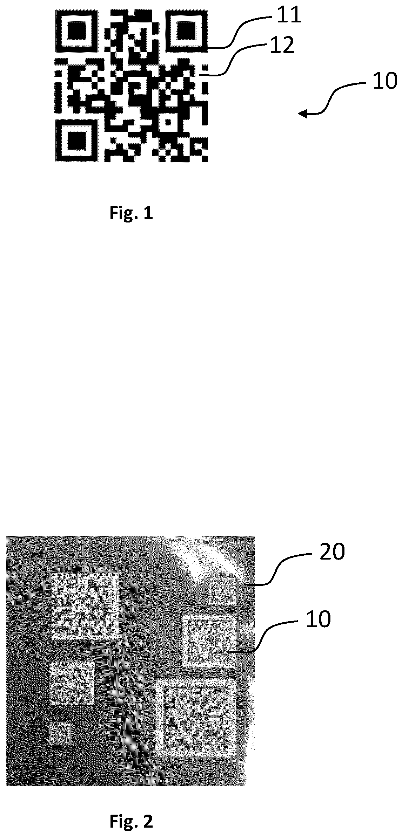

Figur 1 zeigt einen Quick-Response (QR)-Code 10 als Beispiel für eine 2D-Matrix. Der QR-Code 10 weist dabei schwarze Quadrate auf einem weißen Hintergrund auf. Wie oben beschrieben können die Quadrate und der Hintergrund aber auch dieselbe Farbe haben, jedoch einen unterschiedlichen Farbton bzw. eine unterschiedliche Farbnuance, etwa "Dunkelgrün" und "Hellgrün", "Dunkelblau" und "Hellblau", etc. Die Quadrate müssen nicht ausgefüllt sein. Sie können unterschiedlich groß sein und sich berühren oder nicht berühren.
Figur 2 zeigt mehrere Ausführungsformen eines QR-Codes 10 auf einem Stück Kunststoff 20, aufgebracht mittels des erfindungsgemäßen Verfahrens, also mittels Behandlung der Oberfläche des Stücks Kunststoff mittels eines Lasers. Gezeigt sind verschieden Ausführungen eines QR-Codes 10. In diesem Fall entspricht der weiße Hintergrund dem mittels des erfindungsgemäßen Verfahrens behandelten bzw. veränderten Abschnitts der Oberfläche.

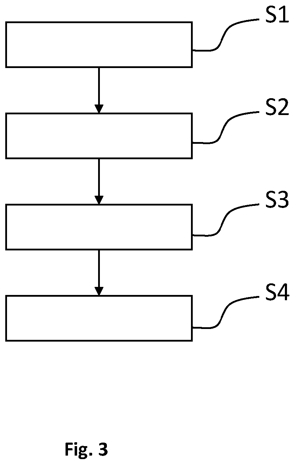

Figur 3 zeigt ein Blockdiagramm eines erfindungsgemäßen Verfahrens gemäß einer Ausführungsform. Schritt S1 entspricht dem Bereitstellen eines Flaschenkastens aus Kunststoff und Schritt S2 dem Behandeln zumindest eines Teils einer Oberfläche des Flaschenkastens mittels eines Lasers, sodass eine Materialstruktur der Oberfläche des Flaschenkastens verändert wird. Optional schließen sich dem die Schritte S3 und S4 an. Gemäß einer Ausführungsform kann der Flaschenkasten noch zusätzlich in Schritt S3 bedruckt werden. Dies kann dann den Kontrast zwischen 2D-Matrix-Code noch weiter vorteilhaft verstärken. In Schritt S4 kann weiter optional eine Schutzlack, insbesondere auch in Form eines Drucks, aufgebracht werden. Dies kann vorteilhaft sein, um den Code vor Verkratzen und dadurch vor Unlesbarkeit zu schützen. Schritte S1-S4 müssen nicht zwingend in der genannten Reihenfolge erfolgen, sondern können in beliebiger Reihenfolge stattfinden.

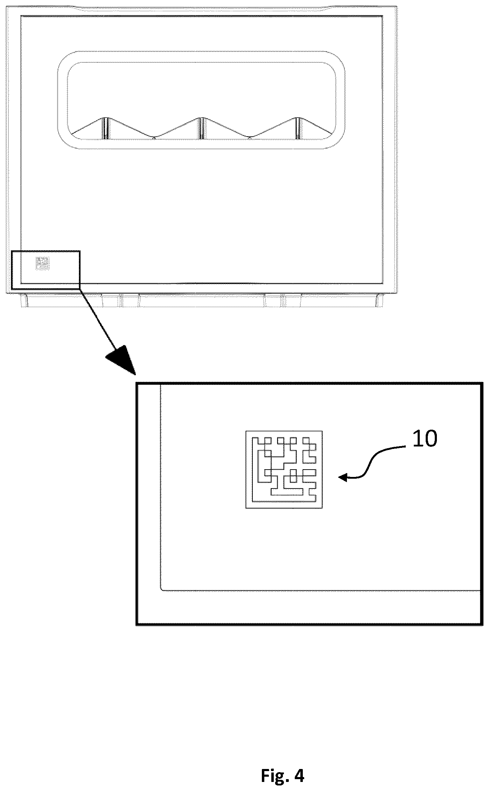

Figur 4 zeigt beispielhaft einen Flaschenkasten, bei dem ein QR-Code 10 mittels des erfindungsgemäßen Verfahrens, also mittels Behandlung der Oberfläche des Stücks Kunststoff mittels eines Lasers auf eine Außenseite des Flaschenkasten aufgebracht ist.

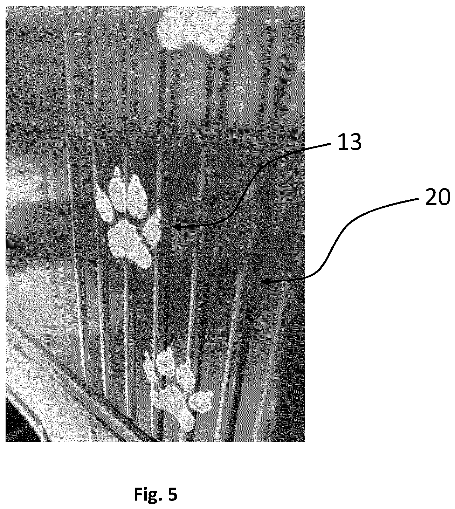

Figur 5 zeigt einen Ausschnitt eines Flaschenkastens aus einem Kunststoff 20, aufweisend mittels des erfindungsgemäßen Verfahrens aufgebrachte bzw. eingebrachte dekorative Elemente 13. Die dekorativen Elemente 13 wurden mittels Aufschäumens aufgebracht bzw. eingebracht, d. h. wie gemäß einer Ausführungsform beschrieben erhitzt der Laser durch entsprechenden Energieeintrag das Material, sodass kleine Gasbläschen entstehen, die eine im Vergleich zu dem Material andersfarbige, hier hellere Materialstruktur der Oberfläche entstehen lassen. Die so veränderte Materialstruktur steht in dem gezeigten Beispiel von dem Kunststoff-Material 20 hervor, sodass sich ein optisch-haptischer Effekt ergibt. Bemerkenswert ist auch, dass hier geriffelte Stellen, also Stellen des Kunststoff-Materials 20, welche Erhebungen aufweisen, mit dekorativen Elementen 13 versehen sind. Mit einem herkömmlichen Verfahren, wie etwas Bedrucken, wäre dies nicht möglich.

Die Erfindung ist nicht auf die hierin beschriebenen Ausführungsformen und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: QR-Code
- 11: Schwarzes Quadrat
- 12: Weißer Hintergrund
- 13: Dekoratives Element
- 20: Kunststoff
- S1: Schritt 1
- S2: Schritt 2
- S3: Schritt 3
- S4: Schritt 4

## Patentansprüche

1. Laser-basiertes Verfahren zum Verändern der Oberfläche eines Flaschenkastens, wobei das Verfahren aufweist:
(i) Bereitstellen (S1) eines Flaschenkastens aus Kunststoff, und
(ii) Behandeln (S2) zumindest eines Teils einer Oberfläche des Flaschenkastens mittels eines Lasers, sodass eine Materialstruktur der Oberfläche des Flaschenkastens verändert wird.

2. Verfahren gemäß Anspruch 1, wobei der Laser so konfiguriert ist, dass das zumindest teilweise Behandeln der Oberfläche des Flaschenkastens mindestens eines von Verdampfung, Schmelzen, Abtrag und Aufschäumung des Materials aufweist, insbesondere wobei durch das Verändern der Materialstruktur des Kunststoffs ein Farbunterschied zwischen einem behandelten Abschnitt und einem nicht behandeltem Abschnitt der Oberfläche erzeugt wird.

3. Verfahren gemäß Anspruch 1 oder 2, wobei der Flaschenkasten durch das zumindest teilweise Behandeln der Oberfläche des Flaschenkastens mittels des Lasers mit einer Erkennungsmarke oder einem dekorativen Element (13) versehen wird.

4. Verfahren gemäß einem der Ansprüche 1-3, wobei die Erkennungsmarke ein 2D-Matrix-Code ist.

5. Verfahren gemäß einem der Ansprüche 1-4, wobei der 2D-Matrix-Code ein Quick-Response-Code, QR-Code, (10) ist.

6. Verfahren gemäß einem der Ansprüche 1-5, wobei der Flaschenkasten einstückig als Spritzgussteil ausgestaltet ist oder wobei der Flaschenkasten mittels eines Mehrkomponenten-Spritzgieß-Verfahrens hergestellt ist.

7. Verfahren gemäß einem der Ansprüche 1-6, wobei der Kunststoff ausgewählt ist aus Polyethylen hoher Dichte (HDPE) und/oder Polypropylen (PP).

8. Verfahren gemäß einem der Ansprüche 1-7, wobei der Kunststoff lasersensitive Additive aufweist.

9. Verfahren gemäß einem der Ansprüche 1-8, wobei der Laser ausgewählt ist aus Faserlaser, Neodym-dotierter Yttrium Aluminium-Granat-Laser, und Nanosekundenlaser.

10. Flaschenkasten aus Kunststoff, insbesondere behandelt mit einem Laser-basierten Verfahren gemäß einem der Ansprüche 1 bis 9, wobei der Flaschenkasten eine mittels Laserbehandlung zumindest teilweise veränderte Oberfläche aufweist.

11. Flaschenkasten gemäß Anspruch 10, aufweisend mindestens einen nicht veränderten Abschnitt und mindestens einen mittels Laserbehandlung veränderten Abschnitt der Oberfläche, wobei der mittels Laserbehandlung veränderte Abschnitt der Oberfläche eine veränderte Materialstruktur im Vergleich zu dem nicht veränderten Abschnitt aufweist, insbesondere wobei beide Abschnitte einen Farbunterschied zueinander aufweisen.

12. Flaschenkasten gemäß einem der Ansprüche 10 oder 11, wobei die mittels Laserbehandlung veränderte Oberfläche eine Erkennungsmarke aufweist, insbesondere einen 2D-Matrix-Code, weiter insbesondere wobei der 2D-Matrix-Code ein Quick-Response-Code, QR-Code, (10) ist.

13. Flaschenkasten gemäß einem der Ansprüche 10-12, wobei der Flaschenkasten einstückig als Spritzgussteil ausgestaltet ist oder wobei der Flaschenkasten mittels eines Mehrkomponenten-Spritzgieß-Verfahrens hergestellt ist.

14. Flaschenkasten gemäß einem der Ansprüche 10-13, wobei der Kunststoff ausgewählt ist aus Polyethylen hoher Dichte (HDPE) und/oder Polypropylen (PP), und/oder wobei der Kunststoff lasersensitive Additive aufweist.

15. Verwendung einer mittels Laser-basierten Verfahrens, insbesondere mittels des Verfahrens gemäß Anspruch 1, auf der Oberfläche eines Flaschenkastens aus Kunststoff angebrachten Erkennungsmarke, insbesondere eines 2D-Matrix-Codes, weiter insbesondere eines Quick-Response-Codes, QR-Code, (10) zum exakten Identifizieren des Flaschenkastens.
